Europäisches Patentamt

European Patent Office

Office européen des brevets

(19)

(11) Numéro de publication: **0 229 559**

**A1**

(12)

# DEMANDE DE BREVET EUROPEEN

(21) Numéro de dépôt: **86402734.7**

(22) Date de dépôt: **09.12.86**

(51) Int. Cl.⁴: **G05B 9/03** , G06F 11/20 , G06F 11/00

(30) Priorité: **13.12.85 FR 8518529**

(43) Date de publication de la demande:
**22.07.87 Bulletin 87/30**

(84) Etats contractants désignés:
**DE GB IT NL SE**

(71) Demandeur: **CIMSA SINTRA**
**26, rue Malakoff**
**F-92600 Asnieres(FR)**

(72) Inventeur: **Sirvin, Pierre Thomson-CSF**
**SCPI-19, avenue de Messine**
**F-75008 paris(FR)**
Inventeur: **Potron, Marc Thomson-CSF**
**SCPI-19, avenue de Messine**
**F-75008 paris(FR)**

(74) Mandataire: **Benoit, Monique et al**
**THOMSON-CSF SCPI 19, avenue de Messine**
**F-75008 Paris(FR)**

(54) **Réseau informatisé de grande sécurité de fonctionnement, et procédé de commande utilisant un tel réseau.**

(57) L'invention concerne principalement un réseau informatique de grande sécurité de fonctionnement.

L'invention a principalement pour objet un réseau numérique dont la très grande sécurité de fonctionnement permet son utilisation dans des commandes numériques par exemple d'aéronefs. Tous les organes étant doublés une panne simple reste parfaitement transparente à l'utilisateur.

L'invention s'applique à la réalisation des systèmes de freinage pour aéronefs.

Fig.1

## RESEAU INFORMATISE DE GRANDE SECURITE DE FONCTIONNEMENT ET PROCEDE DE COMMANDE UTILISANT UN TEL RESEAU

L'invention a principalement pour objet un réseau informatisé de grande sécurité de fonctionnement et un procédé de commande utilisant un tel réseau.

Le progrès réalisé dans les domaines des calculateurs, fera adopter dans de nombreux domaines la commande numérique. Les commandes numériques sont notamment adoptées dans la réalisation des processus industriels et dans la transmission des commandes des véhicules. La défaillance des commandes numériques par exemple d'un avion risque de provoquer la mort des passagers et de l'équipage ainsi que la perte de l'appareil. Il est donc primordial de réaliser des réseaux numériques de grande sécurité de fonctionnement. Le réseau selon l'invention est un réseau d'acquisition, de transmission, de traitement de données et d'exécution de commandes particulièrement bien adapté aux commandes numériques d'aéronefs.

Le réseau selon l'invention comporte un bus sur lequel sont connectés des modules d'acquisition de données, des modules de traitement d'informations ainsi que des modules transmettant des ordres à des actionneurs. Les modules des traitements d'informations sont tous de même ordre dans la hiérarchie. Chaque module émet un message à son tour sur le bus. Le nombre de modules de traitement est supérieur au nombre de modules nécessaires au bon fonctionnement du système. En cas de panne d'un des modules de traitement un des modules qui n'avait pas de rôle opérationnel jusque là le remplace.

Avantageusement le bus est doublé. Avantageusement le module d'acquisition de donnée et le module d'interface d'actionneur sont doublés. Aussi une panne simple d'un élément unique est parfaitement transparente à l'utilisateur.

L'invention a principalement pour objet un réseau local, caractérisé par le fait qu'il comporte connectés sur un bus des modules d'accquisition de données, des modules de calcul et des modules de commande d'actionneur, à chaque instant chaque module de commande étant supervisé par un module de calcul, le nombre de modules de calcul étant supérieur au nombre de modules de commande d'actionneurs, les modules redondants étant susceptibles de remplacer un module de calcul défaillant.

L'invention a aussi pour objet un procédé de commande numérique utilisant des modules de commande d'actionneur chacun supervisé par un module de calcul, caractérisé par le fait qu'au moins un module de calcul supplémentaire vérifie en temps réel les calculs effectués par au moins un des modules de calcul supervisant les modules de commande.

L'invention a aussi pour objet un ordinateur comportant une pluralité de processeurs effectuant des calculs désirés, caractérisé par le fait qu'il comporte au moins un processeur redondant vérifiant en temps réel les calculs effectués par au moins un des processeurs ledit processeur redondant changeant périodiquement le processeur dont il vérifie les calculs.

L'invention a aussi pour objet un procédé de calcul utilisant une pluralité de processeurs effectuant des calculs désirés ainsi qu'au moins un processeur redondant, caractérisé par le fait que si lors d'une vérification un processeur redondant détecte la non concordance des résultats obtenus avec ceux calculés par un premier processeur effectuant les calculs désirés le processeur redondant vérifie la concordance des résultats obtenus avec ceux calculés par un second processeur effectuant les calculs désirés distinct du premier processeur surveillé :

-si les résultats de calcul de ce second processeur ne concordent pas avec ceux calculés par le processeur redondant ce dernier se déconnecte ;

-si les résultats de calcul de ce second processeur concordent les résultats de calcul obtenus par le processeur redondant ce processeur émet l'ordre au premier processeur surveillé de se déconnecter et le remplace.

L'invention sera mieux comprise au moyen de la description ci-après des figures annexées données comme des exemples non limitatifs parmi lesquels :

-la figure 1 est un schéma synoptique général du réseau selon l'invention ;

-la figure 2 est un schéma synoptique d'un module d'acquisition de données selon l'invention ;

-la figure 3 est un schéma synoptique d'un module de commande d'actionneur selon l'invention ;

-la figure 4 est un schéma d'un exemple de réalisation d'actionneur selon l'invention ;

-la figure 5 est un organigramme d'un programme informatique utilisé dans le dispositif selon l'invention ;

-la figure 6 est un exemple de structure des messages émis sur le bus selon l'invention.

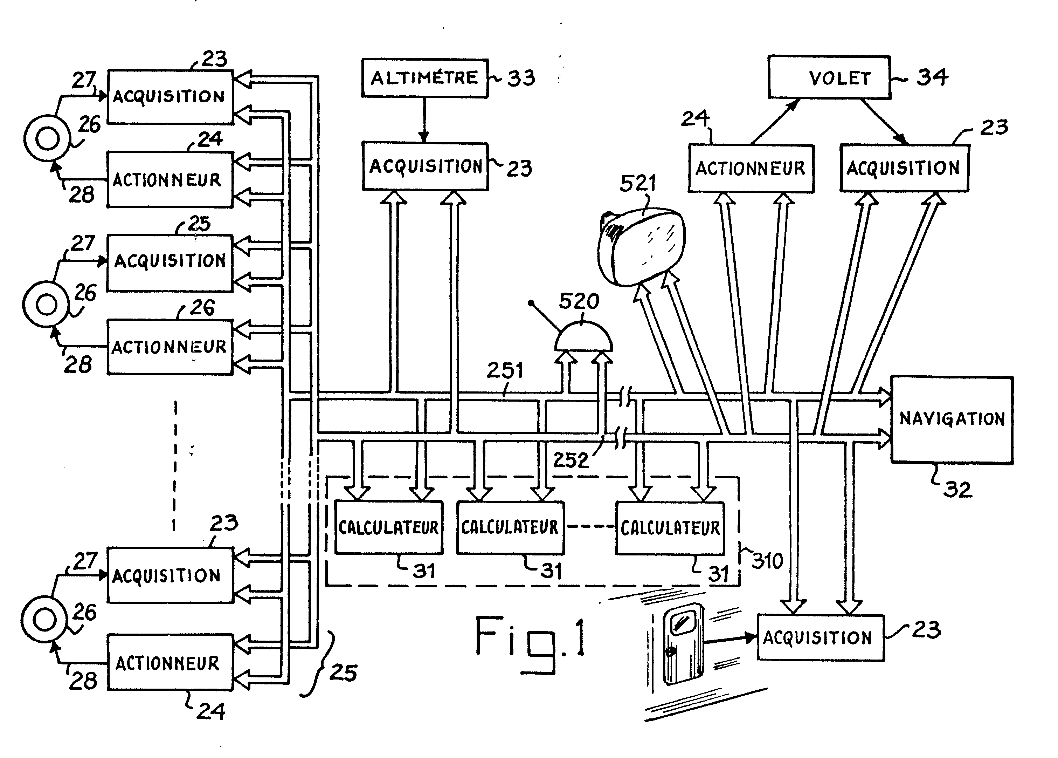

Sur les figures 1 à 6 on a utilisé les mêmes références pour désigner les mêmes éléments.

Sur la figure 1, on peut voir le schéma synoptique général d'un exemple de réalisation du dispositif selon l'invention.

Le dispositif selon l'invention comporte des modules d'acquisition des données 23, des modules de commande d'actionneur 24 et des modules de calcul 31 reliés par un bus 251. Avantageusement pour des raisons de sécurité, le bus 251 est doublé par un bus identique 252. En cas d'indisponibilité d'un des bus 251 ou 252, toutes les informations passent par le bus valide. Le bus défectueux est inhibé. Ainsi on évite les conséquences désastreuses d'un bus dont un des fils serait collé à 0 ou à 1 c'est-à-dire qui transmettrait de façon continue indépendamment des valeurs émises sur ledit bus, la valeur 0 ou la valeur 1 sur un de ces fils.

Dans une première variante de réalisation du dispositif selon l'invention, les bus 251 et 252 se partagent le trafic d'informations à transmettre. Dans la réalisation préférée du dispositif selon l'invention les bus 251 et 252 transmettent en parallèle les mêmes informations assurant la redondance totale. Les bus 251 et 252 sont par exemple des bus asynchrones, la vitesse de transmission étant par exemple égale à 1 Mbit/s. Les modules 23 d'acquisition de données émettent sur les bus 251 et 252 selon une procédure qui sera décrite ci-après, les données acquises et les informations concernant l'état desdits modules d'acquisition 23. Les modules d'acquisition 23 sont reliés à des capteurs.

Sur la figure 1 est illustré un exemple non limitatif du dispositif de commande numérique d'un aéronef. Les modules d'acquisition 23 sont reliés par exemple à des dynamos ou des alternateurs tachymétriques rendus solidaires des roues 26 par des lignes 27. Ces modules d'acquisition 23 permettent de déterminer la vitesse de rotation des roues 26. Un autre module 23 est relié à un altimètre 33 permettant la détermination de l'altitude de l'avion. D'autres modules d'acquisition 23 sont reliés à des surfaces aérodynamiques mobiles comme par exemple les volets permettant d'en connaître leurs positions exactes ou vérifient la fermeture hermétique de toutes les issues de l'aéronef. Divers autres modules d'acquisition 23 n'ont pas été représentés sur la figure 1 pour la clarté de cette figure. On peut citer à titre d'exemple non limitatif un module d'acquisition 23 permettant de connaître la position de la roulette avant du train d'atterrissage le module d'acquisition 23 vérifiant si le train d'atterrrissage est sorti ou rentré.

Les bus 251 et 252 sont avantageusement reliés à d'autres systèmes informatiques de l'avion par exemple au système de calcul de navigation 32.

Le dispositif selon l'invention comporte des modules de commande d'actionneur 24 permettant la commande par des lignes 28 des divers actionneurs à bord de l'aéronef. Les lignes 28 sont par exemple des lignes analogiques. Les actionneurs eux-mêmes non représentés sur la figure 1 sont par exemple des servovalves de freinage, le vérin ou les servovalves des commandes des volets aérodynamiques mobiles ou le système d'admission des carburants des moteurs de l'aréonef. Les actionneurs exercent des actions permettant la bonne marche de l'aéronef. L'utilisation des lignes 28 analogiques permet d'adapter le système selon l'invention à des actionneurs de type classique. Les modules de calcul 31 traitent les données reçues sur les bus 251 et 252. Les modules de calcul 31 émettent sur les bus 251 et 252 les ordres qui seront transmis aux modules de commande des actionneurs 24 qui feront exécuter par les actionneurs les actions désirées.

Avantageusement chaque module de commande d'actionneur 24 est commandé par un module de calcul 31.

L'une des caractéristiques du dispositif selon l'invention consiste dans le fait que le nombre de modules de calcul 31 est supérieur au nombre des modules de commande d'actionneur 24. Ainsi en cas de panne d'un module de calcul 31 un autre module le remplace instantanément.

Avantageusement les modules d'acquisition 23 ainsi que le module de commande d'actionneur 24 comportent des organes dédoublés permettant en cas de panne de continuer à assurer le bon fonctionnement desdits modules.

Chaque module de calcul 31 comporte un microprocesseur des interfaces d'entrée et sortie, une mémoire vive de calcul et un support contenant le programme de fonctionnement. Le programme de fonctionnement est par exemple contenu dans une mémoire morte. La mémoire morte est par exemple une mémoire morte programmable (PROM en terminologie anglo-saxonne), une mémoire morte électriquement programmable (EPROM en terminologie anglosaxonne) ou une mémoire électriquement reprogrammable (EEPROM en terminologie anglo-saxonne).

Avantageusement, la ou les mémoires mortes contenant le programme de fonctionnement sont montées sur des supports permettant leur remplacement aisé facilitant la maintenance logicielle. Les mémoires mortes seront changées soit par suite de défaillance physique, d'une défaillance du programme ou par suite d'amélioration du programme de fonctionnement.

Dans une exemple de réalisation du dispositif selon l'invention le programme de fonctionnement de chaque module de calcul 31 comporte l'indication de la fonction que le module de calcul 31 doit assumer. Par exemple le premier module de calcul 31 devra actionner la servovalve de freinage de la roue droite avant de l'aéronef et le deuxième module de calcul 31 devra superviser la position des volets droits à une valeur de consigne décidée par le pilote. Certains modules de calcul 31 n'étant pas affecter au départ peuvent remplacer un module de calcul 31 en cas de défaillance.

Dans la variante préférée de réalisation du dispositif selon l'invention les affectations des modules de calcul 31 sont effectuées par des brochages du fond de panier. Les modules de calcul 31 étant réalisés sous forme de carte à insertion les connecteurs dans lesquels ils sont insérés étant appelés fond de panier. La sélection du numéro d'ordre et/ou de fonction assumée est effectuée, soit en reliant un des plots d'entrée à un plot déterminé de la carte, soit en connectant chaque module de calcul 31 de façon spécifique à une carte supplémentaire non représentée sur la figure 1 contenant les ordres d'affectation de chaque module 31 dans une mémoire morte.

Pour des faibles quantités de calcul à exécuter un module de calcul 31 comportera par exemple un microprocesseur 6809. Pour des quantités d'opérations plus importantes à effectuer un module de calcul 31 comportera par exemple un microprocesseur de la famille 68000 par exemple le microprocesseur 68000, le microprocesseur 68010 ou le microprocesseur 68020.

Au démarrage du système selon l'invention, tous les modules 23, 24 et 31 seront à l'écoute sur les bus 251 et 252. Si un message quelconque est présent sur un des bus 251 ou 252 aucun module 23, 24 ou 31 n'émet sur ces bus. Normalement au démarrage aucun module n'émet sur les bus 251 ou 252. Chacun des modules 23, 24 et 31 dispose d'un temps d'écoute avant émission sur les bus 251 et 252 (appelés time out en terminologie anglo-saxonne). Aucun message n'étant présent sur les bus 251 et 252 le module 23, 24 ou 31 ayant le time out le plus court se met à émettre sur les bus 251 et 252.

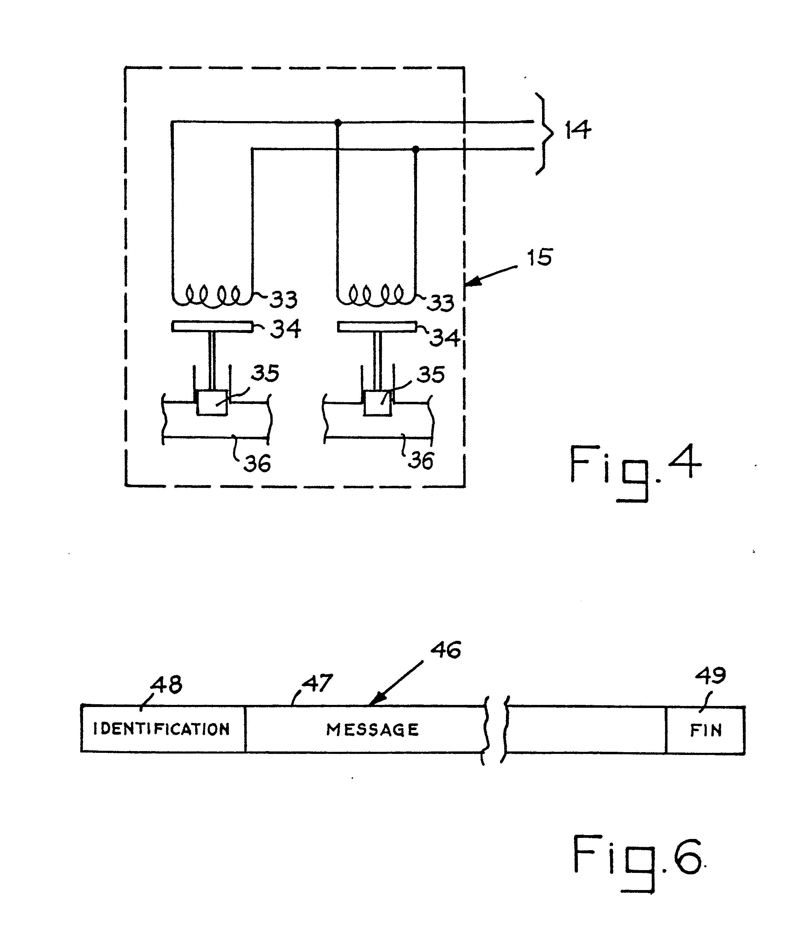

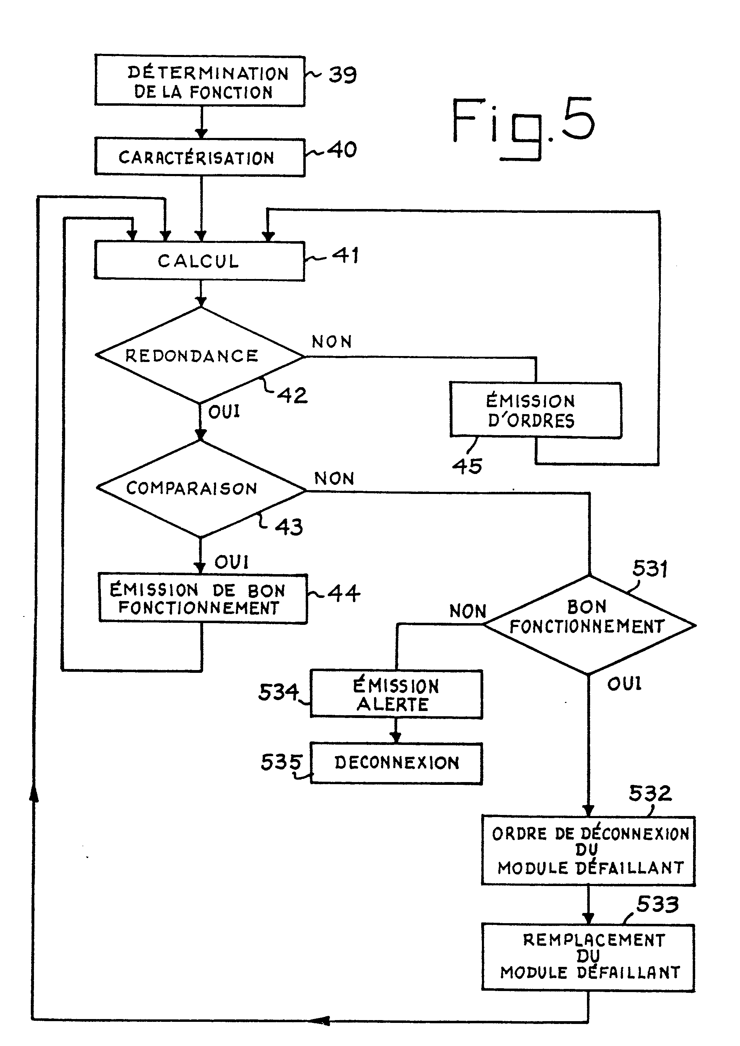

Un exemple de forme de message circulant sur les bus 251 et 252 est illustré par la figure 6. Un message 46 comporte un en-tête 48, un texte de message 47 et une indication de fin de message 49. L'en-tête 48 comporte par exemple l'indication du numéro du module émettant ainsi que la destination de message. Le texte de message lui-même 47 comporte les données qu'il est nécessaire de transmettre. La longueur du texte de message 47 est variable. Dans certain cas le texte de message 47 se résume à un message de bon fonctionnement du module. L'identification de fin de message 49 indique au module 23, 24 ou 31 ayant le numéro suivant que le bus est libre et qu'il peut émettre. En fonctionnement normal successivement les modules d'acquisition de données 23 émettent des messages sur l'état du dispositif qu'ils supervisent ainsi qu'un message de leur bon fonctionnement. Le module de calcul 31 détermine d'après les données transmises par un module d'acquisition 23 et les consignes du pilote transmises par des commandes 520 la valeur d'action nécessaire à l'obtention du résultat désiré. Successivement chaque calculateur 31 émet sur les bus 251 et 252 le message de commande vers l'actionneur 24 correspondant. Si cela est jugé nécessaire le calculateur 31 émet, sur un dispositif d'affichage 521 par exemple un processeur graphique associé à un tube cathodique, des messages. Le module de commande d'actionneur 24 déclenche les commandes d'actionneur associé et émet sur les bus 251 et 252 le message de bon fonctionnement. En fonctionnement normal les modules de calcul 31 redondants effectuent les calculs d'autotest et à leur tour émettent un message de bon fonctionnement sur les bus 251 et 252.

Avantageusement, le calculateur 31 redondant effectue simultanément les mêmes calculs qu'un des modules de calcul 31 supervisant réellement un module de contrôle d'actionneur 24. Par exemple si on dispose de n modules d'actionneur et de p (p supérieur à n) modules de calcul 31 le module de calcul 31 numéro $n+1$ va effectuer le même calcul que le module de calcul 31 numéro 1, le module de calcul 31 numéro $n+2$ effectuera le même calcul que le module de calcul 31 numéro 2, ainsi jusqu'au module de calcul 31 numéro p qui effectuera le même calcul que le module de calcul 31 numéro p-n. Au cas où le module redondant trouve le même résultat de calcul que le module ayant effectivement en charge la supervision d'un module de contrôle d'actionneur 24 il émet un message de bon fonctionnement.

Dans le cas contraire, il est nécessaire de déterminer lequel des deux modules de calcul 31 est défaillant : le module de calcul 31 assurant la supervision d'un module de commande d'actionneur 24 ou le module 31 redondant. Ainsi, au cycle d'émission suivant le module redondant se met à l'écoute d'un module de calcul 31 différent, par exemple du module suivant. Ainsi le module $n+1$ effectuera les mêmes calculs que le module de calcul 31 numéro 2. Le module de calcul 31 numéro $n+1$ effectue ainsi le même calcul que le module de calcul 31 numéro 2 pendant plusieurs cycles d'émission par exemple 10 de façon à avoir eu une acquisition des mêmes données que le module de calcul 31 numéro 2 afin de compléter ses tables en mémoire vive. A ce moment là le module de calcul 31 redondant numéro $n+1$ compare les résultats des calculs avec le message émis par le module de calcul 31 numéro 2 sur les bus 251 et 252.

Si les résultats de calcul du module de calcul 31 numéro 2 concordent avec les résultats du calcul du module de calcul 31 numéro n + 1 le module de calcul 31 numéro 1 est défaillant.

Par contre si les résultats du calcul obtenus par le module de calcul 31 numéro 2 ne concordent pas avec les résultats de calcul obtenus par le module de calcul 31 redondant numéro n + 1 le module de calcul 31 redondant numéro n + 1 est défaillant. Dans le premier cas le module 31 redondant numéro n + 1 émet sur les bus 251 et 252 les messages des défaillances du module de calcul 31 numéro 1. Le module de calcul 31 numéro 1 s'inhibe le module de calcul 31 numéro n + 1 n'est plus un module redondant mais remplace le module de calcul 31 numéro 1. Toutes ces opérations sont parfaitement transparentes à l'utilisateur et pour qui une panne simple reste complétement invisible.

Dans la description qui précède tous les modules de calcul 31 possédaient l'ensemble des programmes nécessaires à leur mise en oeuvre. Ainsi tous les modules de calcul 31 sont constitués par des cartes identiques et interchangeables ce qui facilite la production, la maintenance et la gestion des stocks de modules de remplacement.

Dans une autre variante de réalisation les programmes spécifiques selon le type d'actionneur à commander sont inclus dans des groupes de modules de calcul 31. Dans ce cas chaque groupe de modules de calculateur 31 possédant un même programme comporte au-moins un module de calcul 31 redondant.

Le dispositif selon l'invention ne comporte donc pas de hiérarchie des modules de calcul 31 et permet en cas d'incident le remplacement d'un module de calcul 31 défaillant par un des modules de calcul 31 redondant.

Avantageusement au cas où un module de calcul 31 détecterait que les consignes données par les moyens de commande 520 soient impossibles ou dangereuses il envoit un message sur le dispositif d'affichage 521 et/ou n'exécute pas la commande demandée. Par exemple pour ne pas faire exécuter une action dangereuse le module de calcul 31 émet vers son module de commande d'actionneur 24 le message permettant d'obtenir la valeur la plus proche de la valeur de consigne demandée par les moyens de commande 520 ne présentant pas de danger.

L'invention n'est pas limitée à un dispositif de commande numérique. L'invention s'applique aussi aux ordinateurs multiprocesseurs. Dans le cas des ordinateurs, les modules de calcul ou calculateurs 31 sont appelés "processeur". Le calculateur selon l'invention comporte au moins un processeur 31 redondant assurant successivement les mêmes calculs que les processeurs 31 de travail. Il effectue la vérification du bon fonctionnement du processeur 31 de travail selon la procédure décrite ci-dessus. En cas de défaut de fonctionnement le (ou l'un des) processeurs 31 redondant remplace le processeur défaillant. Sur la figure 1 un tel ordinateur porte la référence 310.

Ledit ordinateur présente une fiabilité amélioré justifiant son utilisation dans les applications en temps réel. Par exemple l'ordinateur selon l'invention est particulièrement bien adapté aux applications aéronautiques et/ou spatiales.

Sur la figure 1, tous les modules de calcul ou processeurs portent la même référence 31 pour bien montrer que chacun des modules est susceptible, s'il n'est pas occupé à d'autres taches, de remplacer un module de calcul ou un processeur défaillant.

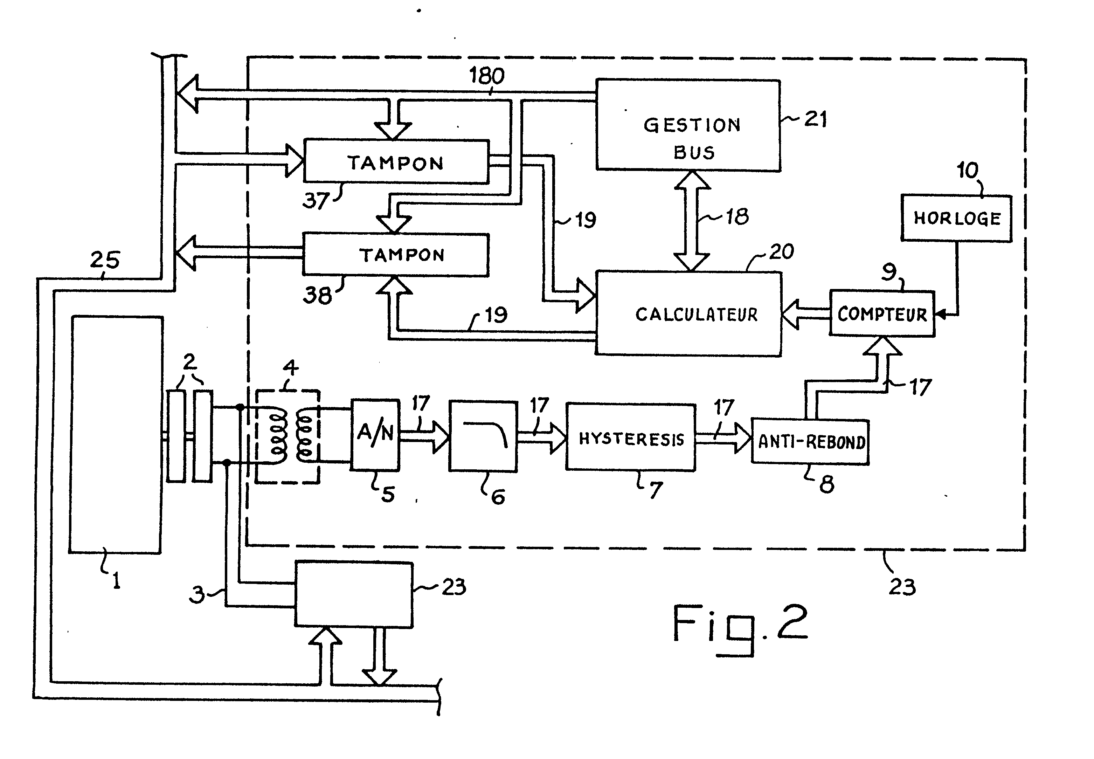

Sur la figure 2, on peut voir un exemple de réalisation du module d'acquisition d'information 23 selon l'invention. Dans l'exemple illustré sur la figure 2 le module d'acquisition d'information 23 mesure la vitesse de rotation d'une roue 1. La roue 1 est couplée mécaniquement à un dispositif 2 de mesure de vitesse de rotation. Le dispositif 2 de mesure de vitesse de rotation est par exemple une dynamo ou un alternateur tachymétrique.

Avantageusement, le dispositif de mesure de vitesse de rotation comporte deux dynamos ou un alternateur tachymétrique permettant en cas de panne d'un des dispositifs de disposer quand même des informations sur la vitesse de la roue 1.

Le dispositif de mesure de vitesse de rotation 2 est relié à des moyens de traitement d'information par une ligne 3. Dans l'exemple illustré la ligne 3 est une ligne analogique faisant partie du faisceau de câbles de transmission d'information ou d'énergie. Un tel faisceau est appelé faisceau avion. Avantageusement le module 23 comporte des moyens (4) d'isolation galvanique du faisceau avion. Les moyens d'isolation galvanique comportent par exemple un transformateur. Le transformateur est optimisé pour améliorer l'immunité du module 23 aux parasites.

Le module d'acquisition de données 23 comporte des moyens permettant de déterminer la vitesse de rotation de la roue 1. Par exemple en liaison avec une dynamo tachymétrique 2 le module 23 comporte un compteur 9 relié à une horloge 10. Le nombre d'impulsions par unité de temps permet de déterminer la vitesse de rotation de la roue 1. Le comptage des impulsions provenant de la roue est relié par exemple à un circuit vendu par le Société Motorolar sous la référence 6840. Le compteur 9 est relié par un des bus internes 17 à un calculateur 20. Avantageusement le calculateur est un calculateur numérique.

Dans un exemple de réalisation le calculateur 20 comporte un microprocesseur vendu sous la référence 6809 par la Société Thomson Semiconducteurs. Le calculateur 20 comporte en outre des mémoires vives de calcul et des mémoires mortes comportant le programme de fonctionnement. L'utilisation d'un calculateur 20 permet de faire des traitements locaux au niveau du module d'acquisition et ainsi de diminuer la quantité d'informations à transmettre sur le bus externe.

Le module d'acquisition de donnée 23 comporte un convertisseur analogique-numérique 5 placé par exemple à la sortie des moyens d'isolation galvanique 4.

Avantageusement les modules d'acquisition de donnée 23 comportent un filtre passe-bas 6 permettant d'améliorer son immunité au bruit.

Dans un premier exemple de réalisation le filtre analogique est monté à la sortie du dispositif d'isolation galvanique 4.

Dans un second exemple de réalisation le filtre numérique est monté à la sortie du convertisseur analogique-numérique 5.

Avantageusement, le module 23 selon l'invention comporte un circuit d'hystérésie 7 permettant d'éliminer les signaux ayant une très rapide variation dans le temps.

Avantageusement, le circuit d'hystérésis 17 est relié à un circuit anti-rebond 8 permettant un fonctionnement sans à-coup du dispositif de freinage.

Dans un exemple de réalisation du dispositif selon l'invention on utilise pour les circuits antirebond des circuits vendus par la Société Motorolar sous la référence MC 14490. La chaîne d'acquisition de données à partir du convertisseur analogique-numérique 5 jusqu'au calculateur 20 est reliée par des bus de donnée interne 17. Les communications avec le bus externe 25 sont assurées par deux mémoires tampon 37 et 38 ainsi qu'un circuit de gestion de bus 21. Sur la figure 2 on a référencé 25 l'ensemble des deux bus 251 et 252 de la figure 1. Le calculateur 20 est relié par un bus 18 au circuit de gestion de bus 21. Le bus externe 25 est relié à une mémoire tampon 37. La mémoire tampon 37 est reliée par un bus de donnée 19 au calculateur 20. De même le calculateur 20 est relié par un bus de donnée 19, à une mémoire tampon 38 elle-même reliée au bus externe 25. L'unité de gestion du bus 21 est reliée par un bus de commande 180 aux mémoires tampon 37 et 38 et/ou au bus externe 25. La mémoire tampon 37 permet la réception instantanée de tout message présent sur le bus 25. La mémoire tampon 38 permet l'émission instantanée d'un message sur le bus externe 25.

Dans une variante de réalisation du dispositif selon l'invention un second module d'acquisition de donnée 23 est couplé soit à l'une soit aux deux dynamos tachymétriques 2 par une ligne analogique 3 permettant de suppléer à une éventuelle défaillance du module d'acquisition des données 23.

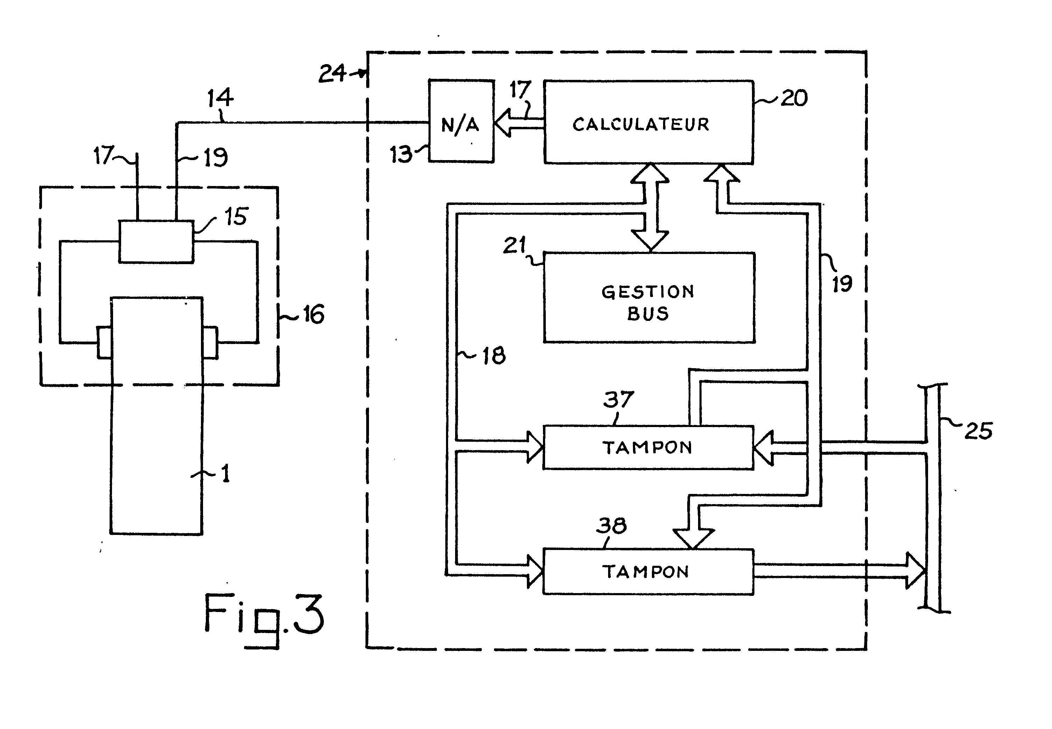

Sur la figure 3, on peut voir un exemple de réalisation d'un module de commande d'actionneur 24.

Dans l'exemple illustré sur la figure 3 l'unité de gestion des bus 21, le calculateur 20 et les mémoires tampon 37 et 38 sont reliés par un unique bus de commande 18. Les mémoires tampon 37 et 38 sont reliées par l'unique bus 19 au calculateur 20. Le calculateur 20 est relié par un bus interne 17 à un convertisseur numérique-analogique 13. Le module 24 est relié par une ligne 14 à une première entrée 19 d'une servovalve 15 du système de freinage 16. La servovalve 15 comporte d'autre part une seconde entrée 17. La servovalve 15 permet sur commande électrique présente à l'entrée 17 d'augmenter la pression d'un circuit de freinage. L'augmentation de la pression d'un circuit de freinage provoque un contact mécanique entre par exemple un disque métallique solidaire de la roue 1 et les plaquettes de frein. Les frottements entre le disque et les plaquettes provoquent la conversion en énergie cinétique de l'avion en énergie calorifique.

Le signal de commande présent sur la première entrée 19 de la servovalve 15 permet d'abaisser la pression fournie par la servovalve 15 au circuit de freinage afin d'éviter un blocage des roues.

Le dispositif objet de la présente invention est facilement adaptable au système de freinage actuellement mis en oeuvre par exemple sur des avions.

Sur la figure 4, on peut voir un exemple de réalisation d'une servovalve 15 comportant deux circuits de commande permettant de suppléer à la défaillance d'un des deux circuits. La ligne 14 alimente en parallèle deux électro-aimants 33. Chaque électro-aimant 33 permet de déplacer un support magnétique 34 rendu solidaire d'un piston 35. Les éléments 34 sont attirés à une position de repos par des moyens de rappel non représentés sur la figure. Suivant sa position le piston 35 permet le passage plus ou moins important d'un fluide dans un tuyau 36. Le fluide est par exemple une huile. La circulation du fluide permet d'actionner ou non le système de freinage ou au contraire d'abaisser la pression du circuit de freinage assurant un défreinage évitant un blocage de roues.

Il est bien entendu qu'en fonctionnement normal les deux pistons ont des positions identiques. En cas de défaillance d'un des deux pistons le second piston compense automatiquement les variations du débit dues à la position du piston défaillant.

Dans une variante de réalisation du dispositif selon l'invention, le module 24 de commande de la servovalve 15 commande directement la pression du circuit de freinage, et non plus la dépression permettant d'éviter un blocage des roues. Il est bien entendu que la pression engendrée par la servovalve 15 correspond à un freinage sans blocage des roues de l'aéronef.

Sur la figure 5, on peut voir un organigramme d'un programme permettant la mise en oeuvre du dispositif selon l'invention. Ce programme est exécuté par le calculateur des modules de calcul 31. Le programme commence en 39 par la détermination de la fonction alloué au module c'est-à-dire quel module de contrôle d'actionneur 24 il est chargé de superviser.

De 39 on va en 40.

En 40 on charge les tables nécessaires au calcul avec les valeurs correspondant à l'actionneur à surveiller.

On va en 41.

En 41 le calculateur effectue les calculs proprement dits. Les calculs de commande numérique à émettre sur le bus 25 sont connus en tant que tels.

De 41 on va en 42.

En 42 le module teste s'il est un module redondant ou s'il est un module supervisant réellement un module de commande d'un actionneur 24.

Si non on va en 45.

En 45 le module de calcul 31 émet les ordres sur le bus 25 destiné au module de commande d'actionneur 24 qu'il supervise.

On va en 41.

Si oui on va en 43.

En 43 on effectue la comparaison entre les calculs effectués par le module ayant effectivement la charge de la supervision d'un module de commande d'actionneur 24 effectuant le même calcul que lui.

Si le résultat est identique on va en 44.

En 44 on effectue l'émission d'un message de bon fonctionnement.

On va en 41.

Si les résultats de calcul sont différents on va en 531.

En 531 on vérifie si le module 31 redondant fonctionne correctement. Cette vérification est effectuée, comme décrit précédemment, soit par un programme d'autotest soit par comparaison de résultat de calcul avec un autre module de calcul 31 non redondant que le module 31 initialement surveillé.

En cas de bon fonctionnement (du module 31 redondant qui en train d'éxécuter ce programme) on va en 532.

En 532 on émet sur le bus 25 l'ordre de déconnexion du module défaillant.

On va en 533.

En 533 le module effectuant ce programme remplace le module 31 défaillant.

On va en 41.

En cas de mauvais fonctionnement on va en 534. En 534 on émet, sur le bus 25, un message indiquant le non fonctionnement du module.

On va en 535.

En 535 on effectue la déconnexion du module du bus 25 et/ou son arrêt de fonctionnement.

L'acquisition des données sur le bus 25 est assurée soit par des moyens annexes par exemple des mémoires tampon soit est vue comme des interruptions par le calculateur. Ces interruptions ne sont pas représentées sur la figure 5. Chacun des modules d'acquisition de donnée 23 de commande d'actionneur 24 ou de calcul 31 émet à son tour un message.

Sur la figure 6 est illustré un exemple de structure de message émis. Le message 46 émis comporte un en-tête d'identification 48 permettant d'identifier le module émetteur ainsi que le module auquel est destiné le message. Le texte du message 47 comporte les données à transmettre. Si le module dont c'est le tour de parole n'a pas de donnée à transmettre il transmet uniquement un message de bon fonctionnement ou ne transmet pas de donnée 47 du tout. La fin du message est signalée par un signal spécifique 49. La signalisation de fin 49 permet aux modules 23, 24 ou 31 d'ordre immédiatement supérieur aux modules ayant émis de commencer à émettre sur le bus 25.

L'invention s'applique principalement à la réalisation de réseaux à grande sécurité de fonctionnement.

Avantageusement de tels réseaux sont complétement insensibles à une panne simple c'est-à-dire une panne d'un organe unique. Le dispositif selon l'invention s'applique particulièrement aux commandes numériques par exemple d'aéronefs notamment aux commandes de système de freinage.

## Revendications

1. Réseau local, caractérisé par le fait qu'il comporte connectés sur un bus (25) des modules d'acquisition de données (23), des modules de calcul (31) et des modules de commande d'actionneur (24), à chaque instant chaque module de commande étant supervisé par un module de calcul (31) le nombre de modules de calcul (31) étant supérieur au nombre de modules de commande d'actionneurs (24), les modules redondants étant susceptibles de remplacer un module de calcul - (31) défaillant.

2. Réseau selon la revendication 1, caractérisé par le fait qu'il comporte un bus multiple (25) dont chaque bus individuel (251, 252) transmet en temps normal les mêmes informations en parallèle.

3. Réseau selon la revendication 1 ou 2, caractérisé par le fait que les modules d'acquisition de données (23) et/ou les modules de commande d'actionneur (24) sont doublés permettant de pallier à toute panne unique.

4. Réseau selon l'une quelconque des revendications précédentes, caractérisé par le fait qu'il comporte des capteurs (23) et/ou actionneurs (24) doubles permettant de pallier à toute panne unique.

5. Réseau selon l'une quelconque des revendications précédentes, caractérisé par le fait que chaque module (23, 24, 31) comporte un numéro d'ordre, au moment de mise en service tous les modules (23, 24, 31) sont en position de réception sur le bus (25) un module ayant un temps d'écoute plus court que les temps d'écoute des autres modules, le module comportant le temps d'écoute le plus court sur le bus (25) passe en mode d'émission sur ledit bus.

6. Réseau selon la revendication 5, caractérisé par le fait que le module émet sur le bus (25) à son tour l'émission (46) comportant un préambule - (48) indiquant les identités de l'émetteur et du destinataire, le message à transmettre (47) et un signal de fin d'émission (49).

7. Réseau selon la revendication 5 ou 6, caractérisé par le fait que les modules de calcul (31) sont réalisés sous forme de carte électronique enfichable, tous les modules de calcul (31) susceptibles d'assurer la supervision de même type de modules de commande d'actionneur (24) étant identiques, le numéro d'ordre étant déterminé par l'emplacement de la carte dans le fond de panier.

8. Réseau selon la revendication 5 ou 6, caractérisé par le fait que le numéro d'ordre de chaque module est inscrit dans un dispositif de mémorisation dudit module.

9. Procédé de commande numérique utilisant des modules de commande d'actionneur (24) chacun supervisé par un module de calcul (31), caractérisé par le fait qu'au moins un module de calcul (31) supplémentaire vérifie en temps réel les calculs effectués par au moins un des modules de calcul (31) supervisant les modules de commande (24).

10. Procédé selon la revendication 9, caractérisé par le fait que le ou les modules de calcul (31) vérifiant les calculs d'au moins un des modules de calcul (31) supervisant un module de commande d'actionneur (24) changent périodiquement de module de calcul surveillé.

11. Procédé selon la revendication 9 ou 10, caractérisé par le fait que si lors d'une vérification un module détecte la non concordance des résultats obtenus avec ceux calculés par un premier module de calcul (31) supervisant un module de commande d'actionneur (24) le module de calcul (31) vérifie la concordance de résultats obtenus avec ceux calculés par un second module de calcul (31) distinct du premier module surveillé :

-si les résultats de calcul de ce second module de calcul (31) ne concordent pas avec ceux calculés par le module de calcul (31) de vérification ce dernier se déconnecte ;

-si les résultats de calcul de ce second module de calcul (31) concordent les résultats de calcul obtenus par le module de calcul de vérification ce module émet l'ordre au premier module surveillé de se déconnecter et le remplace.

12. Ordinateur comportant une pluralité de processeurs (31) effectuant des calculs désirés, caractérisé par le fait qu'il comporte au moins un processeur (31) redondant vérifiant en temps réel les calculs effectués par au moins un des processeurs (31) ledit processeur redondant changeant périodiquement le processeur dont il vérifie les calculs.

13. Procédé de calcul utilisant une pluralité de processeurs (31) effectuant des calculs désirés ainsi qu'au moins un processeur (31) redondant, caractérisé par le fait que si lors d'une vérification un processeur (31) redondant détecte la non concordance des résultats obtenus avec ceux calculés par un premier processeur (31) effectuant les calculs désirés le processeur (31) redondant vérifie la concordance de résultats obtenus avec ceux calculés par un second processeur (31) effectuant les calculs désirés distinct du premier processeur surveillé :

-si les résultats de calcul de ce second processeur (31) ne concordent pas avec ceux calculés par le processeur (31) redondant ce dernier se déconnecte ;

-si les résultats de calcul de ce second processeur (31) concordent les résultats de calcul obtenus par le processeur (31) redondant ce processeur (31) émet l'ordre au premier processeur (31) surveillé de se déconnecter et le remplace.

Fig.1

27 ~ 23
ACQUISITION

26

28 — ACTIONNEUR ~ 24

27 ~ 25
ACQUISITION

26

28 — ACTIONNEUR ~ 26

23
ACQUISITION

27

26

28 — ACTIONNEUR ~ 24 ~ 25

ALTIMÉTRE ~ 33

ACQUISITION ~ 23

251

252

CALCULATEUR ~ 31

CALCULATEUR ~ 31

CALCULATEUR ~ 31 ~ 310

520

521

24
ACTIONNEUR

VOLET ~ 34

23
ACQUISITION

NAVIGATION ~ 32

ACQUISITION ~ 23

0 229 559

Fig.2

0 229 559

Fig.3

N/A — 13

CALCULATEUR ~20

GESTION BUS — 21

TAMPON — 37

TAMPON — 38

24

14

17

19

15

16

1

17

18

19

25

0 229 559

Fig.4

| IDENTIFICATION | MESSAGE | | FIN |
|---|---|---|---|

Fig.6

# Fig.5

```
┌─────────────────────┐
│    DÉTERMINATION     │~ 39
│    DE LA FONCTION    │
└─────────────────────┘
           │
           ▼
┌─────────────────────┐
│   CARACTÉRISATION    │~ 40
└─────────────────────┘
           │
           ▼
┌─────────────────────┐
│      CALCUL          │~ 41
└─────────────────────┘
           │
           ▼
      ╱─────────╲         NON
     ╱ REDONDANCE ╲───────────────►  ┌─────────────┐
     ╲           ╱                   │  ÉMISSION    │
      ╲─────────╱ ~42                │  D'ORDRES    │
           │ OUI                     └─────────────┘
           ▼                              ~45
      ╱─────────╲         NON
     ╱COMPARAISON╲───────────────►
     ╲           ╱
      ╲─────────╱ ~43
           │ OUI                         531
           ▼                              ╱─────────╲
┌─────────────────────┐      NON        ╱    BON     ╲
│  ÉMISSION  DE BON    │~44 ◄────────── ╲FONCTIONNEMENT╱
│  FONCTIONNEMENT      │                 ╲─────────╱
└─────────────────────┘                       │ OUI
                                              ▼
        534  ┌─────────────┐
             │  ÉMISSION    │
             │  ALERTE      │
             └─────────────┘
                    │
                    ▼
        535  ┌─────────────┐
             │ DECONNEXION  │
             └─────────────┘
                                        532
                              ┌──────────────────────┐
                              │ ORDRE DE DÉCONNEXION  │
                              │         DU            │
                              │  MODULE DÉFAILLANT    │
                              └──────────────────────┘
                                        │ 533
                                        ▼
                              ┌──────────────────────┐
                              │    REMPLACEMENT       │
                              │        DU             │
                              │  MODULE DÉFAILLANT    │
                              └──────────────────────┘
```

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | ADVANCES IN INSTRUMENTATION, vol. 39, partie 2, Proceedings of the ISA International Conference and Exhibit, Houston, Texas, 22-25 octobre 1984, pages 1193-1211; Y. WAKASA et al.: " User-configurable fault-tolerant architecture for a distributed control system" * Page 1194, ligne 23 - page 1196, ligne 17; figures 2-5 * | 1-3,9 | G 05 B 9/03 G 06 F 11/20 G 06 F 11/00 |
| A | US-A-4 245 344 (RICHTER) * Colonne 1, lignes 27-29; figure 1 * | 2 | |
| A | FR-A-2 245 020 (SMITHS INDUSTRIES) * Page 1; page 2, ligne 26 - page 5, ligne 6; figures 1-2 * | 3-4 | DOMAINES TECHNIQUES RECHERCHES (Int. Cl.4) |
| A | FR-A-2 028 517 (PLESSEY BTR) * Page 29, lignes 3-10,19-25 * | 1,8 | G 05 B 9/03 G 06 F 11/20 G 06 F 11/16 G 06 F 15/46 G 05 D 1/00 |
| A | US-A-4 358 823 (McDONALD) * Résumé * | 9 | |
| A | PATENTS ABSTRACTS OF JAPAN, vol. 6, no. 62 (P-111)[940], 21 avril 1982; & JP-A-57 5162 (TOKYO DENRYOKU K.K.) 11-01-1982 | 1,9 | |

--- -/-

Le présent rapport de recherche a été établi pour toutes les revendications

| Lieu de la recherche | Date d'achèvement de la recherche | Examinateur |
|---|---|---|
| LA HAYE | 17-03-1987 | GUIVOL Y. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 500 951  (SUGIMOTO)<br>* Colonne 3, ligne 8 - colonne 5, ligne 5; figures 1,3 * | 1,9 | |
| | --- | | |
| A | US-A-3 786 430  (HAJDU et al.)<br>* Résumé * | 9 | |
| | ----- | | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 17-03-1987 | GUIVOL Y. |